# EUROPÄISCHE PATENTSCHRIFT

(11) **EP 3 651 930 B1**
(45) Veröffentlichungstag und Bekanntmachung des Hinweises auf die Patenterteilung: **04.08.2021**
(21) Anmeldenummer: 18792842.9
(22) Anmeldetag: 07.09.2018
(51) Int. Cl.: B23K 20/06, H01F 38/08

(54) **EMPT SPULE MIT AUSTAUSCHBAREM LEITER**
EMPT COIL COMPRISING A REPLACEABLE CONDUCTOR
BOBINE TIEM À CONDUCTEUR INTERCHANGEABLE

(30) Priorität: 26.09.2017 DE 102017122229
(43) Veröffentlichungstag der Anmeldung: 20.05.2020
(73) Patentinhaber: PSTproducts GmbH, 63755 Alzenau (DE)
(72) Erfinder: PASQUALE, Pablo, 63755 Alzenau (DE)
(74) Vertreter: Pöhner, Wilfried Anton
(86) Internationale Anmeldenummer: PCT/DE2018/100764
(87) Internationale Veröffentlichungsnummer: WO 2019/063038

(56) Entgegenhaltungen:
- DE-A1-102011 010 216
- JP-A- 2012 152 821
- OLEG ZAITOV ET AL: "Bitter coil design methodology for electromagnetic pulse metal processing techniques", JOURNAL OF MANUFACTURING PROCESSES, Bd. 16, Nr. 4, 22. August 2014 (2014-08-22), Seiten 551-562, XP055536454, US ISSN: 1526-6125, DOI: 10.1016/j.jmapro.2014.07.008

## Beschreibung

Vorliegende Erfindung befasst sich mit einer elektromagnetischen Pulsschweißspule gemäß des Oberbegriffs des Anspruchs 1.

Elektromagnetisches Pulsformen/schweißen ist ein Umform- und/oder Schweißverfahren für metallische Werkstücke, bei dem durch starke, zeitlich veränderliche magnetische Felder an den gewünschten, zu verformenden Stellen hohe Wirbelströme im zu bearbeitenden Werkstück induziert werden, wodurch aufgrund der Kopplung der Wirbelströme an diese induzierenden Felder eine hohe Kraft auf den zu verformenden Bereich des Werkstücks ausüben. Gemäß der wohlbekannten Lenzschen Regel ist diese Kraft von der erzeugenden Quelle weggerichtet. Ihre Stärke ist zum einen proportional zur Feldstärke des erregenden magnetischen Feldes und zum anderen zusätzlich proportional zur Änderung dieser Feldstärke mit der Zeit.

Im Stand der Technik ist bekannt, dieses zur Verformung eingesetzte magnetische Feld mittels flächiger, über zwei nebeneinanderliegende Windungen verfügende Spulen zu erzeugen, welche mit einem zeitlich veränderlichen, üblicherweise sinusförmigen Stromfluss beaufschlagt wird. Um zum einen die gewünschten hohen Feldstärken zu erreichen, und zum anderen einen klar definierten Bereich der Verformung zu erhalten, sind diese Spulen so derart ausgeformt, dass sie über, mindestens einen, schmalen Steg verfügen, der in Reihe geschaltet mit Bereichen breiteren Querschnitts eine Konzentration des Stromflusses bewirkt und somit zu einer hohen Stromdichte im Bereich des Steges führt. Derartige spulen werden im Folgenden durchweg als Pulsschweißspulen bezeichnet, obwohl sie sich grundsätzlich genauso zum reinen Verformen eines Werkstücks eigenen. Die Feldstärke des letztendlich zur Verformung führenden magnetischen Feldes sowie auch seine zeitliche Änderung sind direkt proportional zu dieser Stromdichte, weswegen die auf das Werkstück einwirkende Kraft mit dem Quadrat der Stromdichte und die maximale Kraft mit dem Quadrat der Stromdichteamplitude skaliert. Dementsprechend ist man bei der Konstruktion von Pulsschweißspulen bestrebt möglichst schmale Stege einzusetzen.

Dem gegenüber steht jedoch die Tatsache, dass das Material der Spule durch die hohen Stromdichten und thermischen und durch die vom Werkstück auf die Spule rückwirkende Kraft auch hohen mechanischen Belastungen ausgesetzt ist, die zur schnellen Ermüdung der mit hoher Stromdichte belasteten Bereich, also der üblicherweise schmalen Stege, führt. Dies begrenzt in unvorteilhafter Weise die Lebensdauer solcher Pulsschweißspulen.

Im Stand der Technik wurde dieses Problem schon länger erkannt und durch verschiedene Maßnahmen zu lösen versucht. So stellt beispielsweise die japanische Veröffentlichungsschrift JP2004-342535A eine Pulsschweißspule vor, in der der mit eine hohen Stromdichte belastete Spulensteg in eine ihn mechanisch stützende nichtleitende Struktur eingebettet ist, und auch über eine aktive Kühlung gekühlt werden kann. Eine derart ausgestaltete Pulsschweißspule ist jedoch im Vergleich zu den üblicherweise bevorzugten flächigen Pulsschweißspulen sehr dick und auch aufwändig in sowohl Herstellung als auch Betrieb. Ersteres da eine mechanische Stützstruktur aus nicht leitendem Material um die eigentliche Pulsschweißspule angeformt werden muss, letzteres, da ein aktives Kühlsystem bestehend aus Kühlflüssigkeitskanälen und Umwälzpumpe bereitgestellt, angeschlossen, befüllt und vor allem gewartet werden muss.

In O. Zaitov et. al. "Bitter coil design methodology for electromagnetic pulse metal processing techniques", Journal of Manufacturing Processes 16 (2014) 551-562" werden spiralige, aus Einzelteilen zusammengesetzte Pulsschweißspulen offenbart.

Die Veröffentlichungsschrift JP2010/110814A schlägt vor, eine an sich, beispielsweise aus der japanischen Offenlegungsschrift JP 2012-152821 A (z.B. Basis des Oberbegriffs des Anspruchs 1), bekannte Pulsschweißspule mit einem schmalen, symmetrisch zwischen den Bereichen niedriger Stromdichte angeordneten Spulensteg, zur beidseitigen Bearbeitung zwischen zwei Werkstücke zu legen. Hierdurch heben sich die von den Werkstücken jeweils auf die Spule bzw. den Spulensteg ausgeübten Kräfte zumindest teilweise gegenseitig auf und eine mechanische Belastung bzw. gar Verbiegung des Spulensteges wird vermieden oder wenigstens reduziert. Dies ist jedoch nicht immer umsetzbar, wie beispielsweise in dem Fall, dass nur ein einziges zu bearbeitendes Werkstück vorliegt oder falls eine bestimmte Ausrichtung eines zu verformenden Werkstücks oder zweier zu verbindender Werkstücke zueinander einzuhalten ist.

Die deutsche Offenlegungsschrift DE 10 2011 010216 A1, sowie die europäische Patentschrift EP2670554B1 für die Anmelderin beschreiben flächige Pulsschweißspulen, bei der der Zwischenraum zwischen einem mit hoher Stromdichte belasteten Spulensteg schmalen Querschnitts und einem Spulenteil mit größerem Querschnitt, in dem die Stromdichte entsprechend niedriger ist mit einem Kühlisolator ausgefüllt wird. Hierunter wird ein elektrischer Isolator verstanden, der jedoch über eine hohe thermische Leitfähigkeit verfügt. Derartige Eigenschaften aufweisende Materialien sind beispielsweise Bornitrit oder Aluminiumnitrit. Bei dieser Gestaltung ist vorteilhaft erreicht, dass die in der mit hoher Stromdichte belastete Bereich entstehende Hitze mittels des thermisch sehr leitfähigen Materials in den Rest der Spule abgeleitet wird. Weiterhin wird auch eine mechanische Verbindung zwischen dem Spulensteg und dem Rest der Spule hergestellt, sodass dieser nicht durch die vom Werkstück auf in zurückwirkenden Kräfte verbogen werden kann. Im Unterschied zur oben erwähnten Lösung mit aktiver Kühlung kann nichtsdestotrotz eine flache Bauform der Spule eingehalten werden.

Eine Verwendung von Pulsschweißspulen zur Bearbeitung zweier Werkstücke gleichzeitig mag bei einzelnen Anwendungen möglich sein, ist jedoch, wie schon aus oben erwähnten Beispielen ersichtlich, im Allgemeinen keine Lösung für das Problem der mechanischen Beanspruchung des schmalen Spulenstegs. Die von vorgenannter Patentschrift vorgeschlagene Lösung ist dem gegenüber zu bevorzugen, hat jedoch den Nachteil, dass mit dem Kühlisolator ein schwierig zu bearbeitendes Material in die Pulsschweißspule eingefügt werden muss, was Herstellungskosten und Dauer erhöht. Die Lebensdauer ist zwar in höherem Maße verlängert als die Herstellungskosten erhöht sind, jedoch besteht weiterhin ein Bedarf an einer Pulsschweißspule, die eine flache Bauform aufweisen kann und einfach und günstig herzustellen ist und trotzdem eine lange effektive Lebensdauer erreicht.

Vorliegende Erfindung hat sich vor diesem Hintergrund die Aufgabe gestellt, eine solche Pulsschweißspule zu finden. Gelöst wird diese Aufgabe durch eine flächige, insbesondere aus einer Metallplatte ausgeschnittene, elektromagnetische Pulsschweißspule nach Anspruch 1, bei der die mit einer hohen Stromdichte belasteten Bereiche, beispielsweise ein Spulensteg, lösbar mit dem Rest der Spule verbunden sind. Hierdurch ist es möglich die hochbelasteten Bereiche bei auftretender Materialermüdung oder gar Materialbruch auszuwechseln, und den Rest der Spule weiterzuverwenden, der entsprechend der deutlich niedrigeren Belastungen verbunden mit größenbedingt höherer Resilienz üblicherweise eine um vielfaches höhere Lebensdauer aufweist als die Bereiche hoher Stromdichte.

Erfindungsgemäß ist mindestens ein wechselbarer, d. h. lösbar verbundener mit hoher Stromdichte belasteter Bereich vorhanden. Es ist jedoch durchaus möglich, in einer Pulsschweißspule, die mehrere solcher Bereiche aufweist, alle Bereiche derart durch lösbare Verbindungen wechselbar auszugestalten.

Bei flächigen, zweiwindigen Spulen, die über zwei Bereiche der Spule mit großem Querschnitt und entsprechend niedriger Stromdichte. Dieser ist üblicherweise U-förmig und symmetrisch ausgestaltet. In einer Symmetrieebene der Spule befindet sich ein schmaler Spulensteg, der den Strom während eines Schweißstrompulses konzentriert und so zumindest abschnittsweise eine hohe Stromdichte und damit Feldstärke erreicht. Vorliegende Erfindung schlägt nun vor, diesen Spulensteg auswechselbar zu gestalten, indem er auf lösbarer Weise mit dem Rest der Spule verbunden ist. Hierfür kommt einerseits der Einsatz von Verbindungsmitteln, andererseits auch die lösbare Befestigung auf andere Weise in Frage.

Ersteres umfasst beispielsweise die Befestigung mittels Schrauben oder Gewindebolzen, die in zu diesem Zweck vorhandene Aussparungen oder Bohrungen einmal des mit hoher Stromdichte belasteten Bereichs, bzw. Spulensteges, und zum anderen des Rests der Spule eingeführt und auf der gegenüberliegenden Seite mittels einer Kontermutter fixiert wird. Ein Anzug der Mutter mit möglichst hohem Drehmoment stellt einen flächigen Kontakt zwischen den leitenden Flächen des Spulensteges und des Rests der Spule sicher, was zur Vermeidung von parasitären Widerständen bei den im Pulsschweißen eingesetzten hohen Strömen sehr wichtig ist.

Alternativ zu einer Kontermutter kann das Gewinde der Schraube oder des Gewindebolzens auch in ein in entweder den Rest der Spule oder in den Spulensteg eingebrachtes Gewindeloch eingreifen, wobei der Gewindebolzen oder die Schraube zunächst durch das nicht mit einem Innengewinde ausgestattete Teil, entweder der Spulensteg oder der Rest der Spule, geführt und dann in das andere, mit Innengewinde ausgestattete Teil eingeschraubt wird. Hierbei ist wie auch beim Einsatz einer Kontermutter auf einen möglichst festen Sitz zwecks Herstellung eines flächigen Kontaktes zu achten.

Alternativ zur oder gemeinsam mit der Verwendung von Schrauben oder Gewindebolzen können der mit hoher Stromdichte belastete Teil, insbesondere Spulensteg, der Rest der Spule auch durch Zusammenstecken lösbar verbunden werden. Um eine möglichst großflächige Anlage zu erreichen schlägt vorliegende Offenbarung vor, den Rest der Spule hierzu mit einer zu einem ersten Endbereich des Spulensteges komplementären Ausnehmung oder Vertiefung zu versehen, die sich über einen wesentlichen Bruchteil der Länge des Spulensteges erstrecken kann.

Die Ausnehmung oder Vertiefung kann auch über einen sich in Einsteckrichtung des Spulenstegs verjüngenden Querschnitt verfügen, der in Verbindung mit einem sich ebenfalls zum Ende hin keilförmig verjüngendem Querschnitt des ersten Endes des Spulensteges zu einem besseren Reibungsschluss und einer großflächigeren Anlage der beiden Teile aneinander führt. Dies ist insbesondere dann der Fall, wenn die Ausnehmung als durchgängige Öffnung im Rest der Spule ausgestaltet ist, die der Spulensteg von einer Seite eingesteckt wird und nach vollständigem Einführen auf der anderen Seite wieder hervortritt. Dort kann er dann mittels eines Sicherungsstiftes oder Bolzens befestigt werden der zusätzlich, wenn ebenfalls keilförmig gestaltet zu einer Erhöhung der Anpresskraft führt. Gleichermaßen kann durch die Verwendung von Spannbacken die Spannung des Stegs beeinflusst werden.

Außer der im Stand der Technik üblichen einwindigen Spule, die wie oben beschrieben über zwei üblicherweise symmetrisch angeordneter passive Teile mit niedriger Stromdichte und einem in einer Symmetrie in der Spule vorhandenen schmalen Spulenstegs verfügt, sind auch weitere Ausgestaltungen denkbar, die ebenfalls von den von vorliegender Erfindung vorgeschlagenen Prinzip profitieren können. Eine derartige Ausführungsform ist eine zweiwindige Spule aus zwei spiegelsymmetrisch ausgeführten Teilspulen, wobei jede Teilspule einen Bereich mit großer Quererstreckung, also Breite, und dementsprechend niedriger Stromdichte und einen parallel zum ersten Bereich verlaufenden Spulensteg mit kleiner Quererstreckung oder Breite und entsprechend hoher Stromdichte verfügt. Die beiden Teilspulen werden so angeordnet, das ihrer Spulenstege parallel und in einem geringen Abstand zueinander verlaufen und werden elektrisch in Reihe geschaltet mit dem Pulsstromgenerator verbunden, wobei darauf zu achten ist, dass der Strom in beiden Spulenstegen in die gleiche Richtung fließt.

Dieses Gesamtsystem hat gegenüber einer einwindigen Spule den Vorteil, dass der Spulenstegquerschnitt weiter reduziert und die Stromdichte dementsprechend weiter erhöht werden kann und weiterhin durch den Abstand zwischen den Spulenstegen bei dem oberhalb des Spulensteges in einem geringen Abstand angeordneten Werkstück der Bereich mit der höchsten Wirbelstromdichte, der auch die Beschleunigung erfährt, schärfer begrenzt ist als bei einer einwindigen Spule. Hierdurch kann erreicht werden, dass das zu verformende oder mit Gegenstück zu verschweißende Werkstück an einem scheinbar definierten Bereich verarbeitet wird, als diese mit einer einwindigen Spule möglich wäre. Durch Variation des Abstandes der beiden Teilspulen kann die Breite des zu Verformenden Bereichs bzw. Schweißnaht in gewissem Umfange ebenfalls variiert werden. Bevorzugt ist der Spulensteg jeder der Teilspulen lösbar mit dem Rest der Teilspule verbunden, beispielsweise auf einen der oben beschriebenen Arten.

Der wesentliche Vorteil der elektromagnetischen Pulsschweißspule gemäß vorliegender Erfindung liegt offensichtlich darin, dass der Bereich auf höchster Stromdichte, welche im Betrieb üblicherweise am schnellsten ermüden und zur geringen Lebensdauer der Pulsschweißspule beitragen, wechselbar sind. Dadurch wird vorteilhafter weise vermieden, dass die Spule als Ganzes ersetzt werden muss, auch wenn der Rest der Spule, welcher nur eine niedrigere Stromdichte erfährt und dementsprechend eine viel höhere Lebensdauer aufweist als der Spulensteg, weiterverwendet werden kann. Mit dem Spulensteg muss nur ein relativ kleines und einfach herzustellendes Teil erneuert werden, was Material und Kosten spart. Darüber hinaus kann ein Wechsel des Spulensteges auch deutlich schneller durchgeführt werden als ein Wechsel der ganzen Spule, weswegen, beispielsweise nach einem Ermüdungsbruch eines Spulensteges, die Produktion nur für eine kürzere Zeitspanne stillsteht, als bei einer herkömmlichen Spule.

Vorteilhafte Weiterbildungen vorliegender Erfindung, welche einzeln oder in Kombination realisierbar sind, sollen im Folgenden näher vorgestellt werden.

Der Bereich hoher Stromdichte kann bevorzugt als schmaler Steg ausgeführt sein, welcher besonders bevorzugt über einen verbreiterten Endbereich verfügt, mit dem er mit dem Rest der Spule lösbar verbunden wird. Dies erhöht die Auflagefläche, was zum einen Übertritt des Stromes aus dem Rest der Spule in den Spulensteg erleichtert, insbesondere die parasitären ohmschen Widerstände vermindert, und zum anderen auch die Ableitung der mechanischen Belastungen aus dem Spulensteg in den Rest der Spule verbessert.

Zur lösbaren Verbindung des mit hoher Stromdichte belasteten Bereichs, insbesondere Spulenstegs, schlägt vorliegende Offenbarung vor, diesen mit einer Schraub- oder Steckverbindung mit dem Rest der Spule zu verbinden.

Eine Schraubverbindung mittels Schrauben oder Gewindebolzen kann dadurch erfolgen, dass diese durch eine oder mehrere fluchtende Öffnungen oder Bohrungen im Spulensteg und dem Rest der Spule geführt und auf der gegenüberliegenden Seite mit einer Kontermutter fixiert werden. Es ist ebenfalls denkbar, den Spulensteg, den Rest der Spule oder beide Gewindelöchern zu versehen, in welche die Schrauben oder Gewindebolzen eingeschraubt werden. Bei dieser Lösung wird bevorzugt, das Gewinde in den Spulensteg einzuschrauben, da dann mit dem Wechsel des Spulenstegs auch das evtl. durch Festziehen und Wiederöffnen des Gewindebolzens beschädigte Gewinde gewechselt würde.

Ein in den Rest der Spule eingebrachtes Gewindeloch in welches ein durch eine Bohrung des Steges gesteckter Bolzen eingeschraubt wird ist ebenfalls denkbar. Diese Lösung bietet den Vorteil, dass der Bolzen beim Wechseln des Spulenstegs von oben eingeführt und der Steg auf dem Rest der Spule abgelegt werden kann

Zur Befestigung eines Spulensteges werden bevorzugt mehr als eine Schraube eingesetzt.

Alternativ wird bevorzugt, den mit hoher Stromdichte belasteten Bereich, insbesondere Spulensteg, in eine hierzu komplementäre Ausnehmung oder durchgehende Öffnung des Rests der Spule einzustecken. Besonders bevorzugt wird der Spulensteg auf einer der Einschubseite gegenüberliegenden Seite mittels eines Sicherungsstiftes oder Keils gegen unbeabsichtigtes Herausziehen oder Herausfallen gesichert und, bei Verwendung eines Sicherungskeils, in Verbindung mit einer sich keilförmigen verjüngenden Querschnitt des Spulensteges und der ihn aufnehmen Öffnung im Rest der Spule mit höherem Anpressdruck im Rest der Spule verbunden.

Zur weiteren Verringerung parasitärer Ohm'scher Widerstände an der Verbindungsstelle zwischen wechselbarem Bereich hoher Stromdichte und Rest der Spule kann auch eine Leitpaste oder anderes Mittel zur Vergrößerung der effektiven Kontaktfläche eingefügt werden.

Die erfindungsgemäße Spule kann spiegelsymmetrisch ausgeführt sein. Bevorzugt ist der Rest der Spule als U-förmiges Metallteil mit einem im Wesentlichen rechteckigen Querschnitt ausgebildet, dessen Breite an allen Stellen die Breite des Querschnitts des mit hoher Stromdichte belasteten Bereichs um ein Vielfaches, bevorzugt um einen Faktor 3-1000 übersteigt.

Eine andere bevorzugte Ausführungsform ist eine Pulsschweißspule in der nur ein L-förmiger Bereich niedriger Stromdichte vorhanden ist, wobei der Bereich hoher Stromdichte lösbar an den kurzen Schenkel in dessen Endbereich angeschlossen ist und parallel und neben dem längeren Schenkel verläuft.

Um die Lebensdauer einer erfindungsgemäßen Spule weiter zu erhöhen, wird vorgeschlagen, den Querschnitt sowohl des Rests der Spule, also des Bereichs niedriger Stromdichte und des Kopplungsbereichs mit dem Bereich hoher Stromdichte oder Spulensteg, sowie den Spulensteg selbst so auszugestalten, dass sich der Querschnitt im Verlauf der Spule stetig ändert. Besonders bevorzugt sind Querschnittsänderungen auf stetigdifferenzierbare Weise. Dies bedeutet, dass im Verlauf der Spule bevorzugt keine Sprünge in den Abmessungen der Querschnittsfläche und besonders bevorzugt auch keine Knicke vorhanden sind. Eine mögliche und hiervon umfasste, besonders bevorzugte Ausgestaltung sieht vor, alle Innenecken des Rests der Spule und des Spulenstegs abgerundet auszuführen, wobei der Krümmungsradius bevorzugt in etwa einer Breite des Spulensteges entspricht.

Es wird vorgeschlagen die Lebensdauer einer erfindungsgemäßen elektromagnetischen Pulsschweißspule mit wechselbarem Spulensteg dadurch zu verlängern, dass, beispielsweise falls der Spulensteg gebrochen, oder zumindest sichtlich deformiert oder ermüdet ist, diesen vom Rest der Spule zu lösen und zu entfernen, und einen neu bereitgestellten, üblicherweise gleichartigen Spulensteg wieder mit dem Rest der Spule zu verbinden. Gerade jene Bereiche der Spule, die durch eine hohe Stromdichte beaufschlagt sind, unterliegen einem hohen Verschleiß. Dies gilt in besonderer Weise für den Spulensteg. Nach diesem schnell durchführbaren Wechsel des Spulensteges kann die Spule ihre Arbeit fortsetzen.

Weitere Einzelheiten, Merkmale und Vorteile vorliegender Erfindung ergeben sich aus den im Folgenden anhand der Figuren näher erläuterten Ausführungsbeispielen. Diese sollen vorliegende Erfindung nur illustrieren und in keiner Weise in ihrer Allgemeinheit einschränken.

Es zeigen:
- Figur 1:: Eine dreiseiten-Ansicht einer ersten bevorzugten Ausführungsform der erfindungsgemäßen Pulsschweißspule.
- Figur 2:: Den Wechsel des Spulensteges der Ausführungsform aus Figur 1.
- Figur 3:: Eine bevorzugte Ausführungsform der erfindungsgemäßen Pulsschweißspule mit L-förmigem Bereich niedriger Stromdichte, in dem der Spulensteg mittels Steckverbindung befestigt wird.
- Figur 4:: Den Einbau des Spulensteges in der in Figur 3 gezeigten Ausführungsform der erfindungsgemäßen Spule.

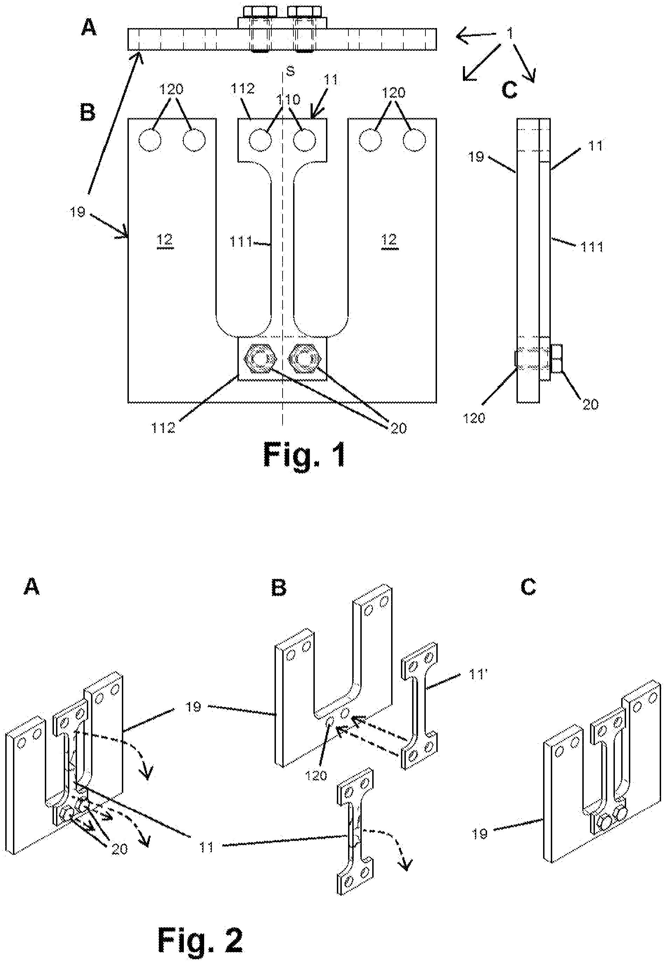

**Figur 1** zeigt in dreiseiten-Ansicht eine bevorzugte Ausführungsform der erfindungsgemäßen Pulsschweißspule mit einem U-förmigen Bereich niedriger Stromdichte, an dem in einer Symmetrieebene der Spule ein Spulensteg mit hantelförmigen Grundriss mit einem seiner beiden Enden mittels Gewindebolzen lösbar befestigt ist.

Wie in der Draufsicht in Teilfigur B zu sehen, hat der wechselbare Spulensteg 11 einen zweifach spiegelsymmetrischen, hantelförmigen Grundriss mit schlankem Mittelteil 111 und breiteren Endplatten 112. In jede Endplatte 112 sind je zwei Bohrungen 110 eingebracht. Der Rest der Spule 19 umfassend die beiden parallel zum Spulensteg verlaufenden, mit niedriger Stromdichte belasteten Teile 12 hat einen U-förmigen Grundriss von spiegelsymmetrischer Gestaltung. An jedem Ende der U-förmigen Schenkel sowie im Scheitelpunkt des Innenbereichs sind je ein Paar von Bohrungen 120 spiegelsymmetrisch zur Symmetrieebene S eingebracht.

Der Spulensteg 11 ist mit dem Rest der Spule 19 lösbar verbunden, indem Endplatte 112 auf den Scheitelbereich des U-förmigen Innenbereiches derart gelegt ist, dass die Bohrungen 110 des Spulenstegs 11 mit den Gewindelöchern 120 des Rests der Spule 19 fluchten wobei Gewindebolzen von oben durch Bohrung 110 gesteckt und in die Gewindelöscher 120 eingeschraubt sind. Hierdurch entsteht eine Pulsschweißspule mit zwei Schenkeln großen Querschnitts und einem mittig, symmetrisch angeordneten Spulensteg mit geringem Querschnitt. Die in die dem befestigten Ende abgewandte Endplatte 112 eingebrachten Bohrungen 110 dienen der Befestigung des Steges mit einer Pulsstromquelle, ebenso Bohrungen 120 in den Endbereichen der Schenkel des Restes der Spule 19. Wie in den Seitenansichten in Teilfiguren B und C zu sehen, ist der Spulensteg auf den Rest der Spule aufgesetzt und daher höhenversetzt auf diesem angebracht.

Es wäre auch denkbar, einen zur Endplatte 112 komplementäre stufenförmiger Ausnehmung in den Scheitelbereich des passiven Teils 119 einzubringen, sodass der Spulensteg im Wesentlichen in derselben Ebene wie der Rest der Spule liegt. Dies hat den Vorteil einer geringeren Bauhöhe der vollständigen Spule, ist jedoch mit einem höheren herstellungsaufwand für den passiven Teil verbunden, und würde auch die Höhe der Gewindelöcher verringern, wodurch sich keine so hohen Anzugskräfte der Gewindebolzen bzw. Schrauben, mit denen der Spulensteg 11 mit dem Rest der Spule 19 verbunden ist, mehr erreichen ließen.

In **Figur 2** ist der Prozess des Wechsels eines Spulensteges illustriert. Teilfigur A zeigt eine erfindungsgemäße Pulsschweißspule mit wechselbarem Spulensteg 11, der, wie angedeutet, aus Gründen der Materialermüdung, ausgetauscht werden soll. Hierzu werden die Bolzen 20 gelöst und der Spulensteg 11 entfernt (Teilfigur B).

Ein neuer Spulensteg 11' wird bereitgestellt, und mit einer Endplatte 112 derart auf den Scheitelbeich des U-förmigen Rests der Spule 19 gelegt, dass Bohrungen 110 mit den Gewindelöchern 120 fluchten, so wie durch die zum Rest der Spule 19 weisenden Pfeile in Teilfigur B angedeutet. Sodann werden die Bolzen 20 durch die Löcher 110 in die Gewindelöcher 120 gesteckt und festgeschraubt. Damit ist der Wechsel abgeschlossen und die erfindungsgemäße Spule steht wieder für weitere Schweiß- oder Verformungsarbeiten zur Verfügung (Teilfigur C).

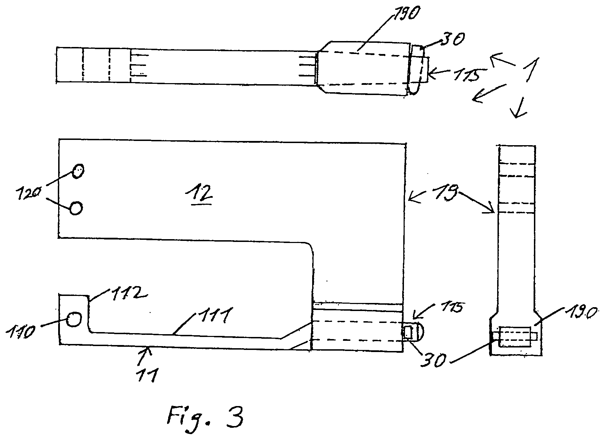

**Figur 3** zeigt eine weitere bevorzugte Ausführungsform der Pulsschweißspule vorliegender Erfindung. Sie besteht aus einem L-förmigen Bereich niedriger Stromdichte 19 mit einer in den kürzeren Schenkel des eingebrachten durchgehenden, sich von einem zum anderen Ende hin teilförmig verjüngenden Ausnehmung 190, in die Spulensteg 11, der an einem Endbereich mit einem zur Ausnehmung 190 komplementären, sich ebenfalls keilförmig verjüngenden Endbereich 115 verfügt, eingesteckt ist. Das dem sich verjüngenden Endbereich 115 gegenüberliegende Ende von Steg 11 verfügt über eine Endplatte 112 mit darin vorhandenen durchgehenden Bohrungen 110. Am in Ausnehmung 190 eingesteckten Ende 115 von Steg 11 befindet sich Öffnung 113, durch welche Sicherungskeil 30 gesteckt ist, um Steg 11 gegen unabsichtliches Herausgleiten oder -fallen zu sichern. Sicherungskeil 30 dient darüber hinaus jedoch ebenfalls dem Zweck, den Anpressdruck und damit die flächige Anlage von Bereich 115 an die Innenwand von Öffnung 190 zu erhöhen. Die Innenecke des L-förmigen Bereiches, der Übergang zwischen dem schmalen Mittelteil 111 und Endplatte 112 sowie Übergang zwischen Mittelteil und Bereich 115 ist abgerundet gestaltet, wobei der Krümmungsradius ca. 10 % der Länge und in etwa der Breite des Spulenstegs entspricht.

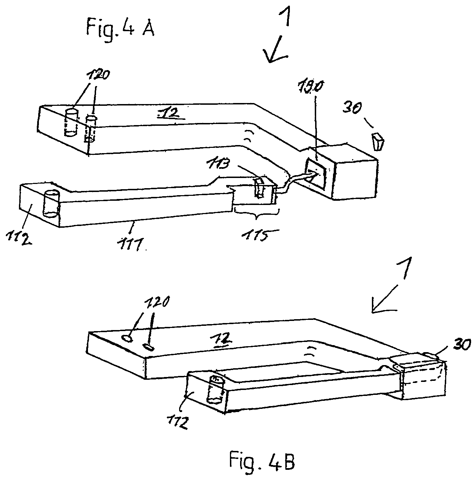

**Figur 4** zeigt in perspektivischer Ansicht, wie der Spulensteg 11 aus der Ausführungsform aus Figur 3 in komplementäre Öffnung 190 im kurzen Schenkel des L-förmigen Restes der Spule 19 eingesetzt wird. In Teilfigur A ist angedeutet, wie zunächst Spulensteg 11 mit dem Bereich 115 in die Öffnungen eingeführt wird, sodass Endbereich 115 die Öffnung 190 vollständig durchgreift. Zum Sichern des Steges 11 wird in das auf der anderen Seite aus Teil 19 herausragende Ende in die dortige Öffnung 113 Sicherungsteils 30 eingesteckt wonach der in Teilfigur B dargestellte Endzustand erreicht ist.

### Bezugszeichenliste

- 1: Pulsschweißspule
- 11: Bereich hoher Stromdichte, Spulensteg
- 110: Bohrung
- 111: Steg, schlanker Mittelteil
- 112: verbreiterter Endbereich
- 115: Endbereich
- 12: Bereich niedriger Stromdichte
- 120: Bohrung, Gewindeloch
- 19: Rest der Spule
- 190: Aussparung für Spulensteg
- 20: Gewindebolzen
- 30: Sicherungskeil

## Patentansprüche

1. Elektromagnetische Pulsschweißspule, umfassend zwei leitende Bereiche (11, 12), wobei der erste Bereich (11) geeignet ist zur Erzeugung einer höheren Stromdichte als der einem Rest der Spule (19) zugeordnete zweite Bereich (12),
wobei die Pulsschweißspule (1) flächig ausgebildet, insbesondere aus einer Metallplatte ausgeschnitten ist,
**dadurch gekennzeichnet, dass**
der zur Erzeugung einer höheren Stromdichte geeignete erste Bereich (11) lösbar mit dem Rest der Spule (19) verbunden ist.

2. Pulsschweißspule nach Anspruch 1, **dadurch gekennzeichnet, dass** der erste Bereich (11) als ein länglicher Steg mit einem gegenüber einer Längserstreckung schmalen Quererstreckung ausgeformt ist.

3. Pulsschweißspule nach Anspruch 2, **dadurch gekennzeichnet, dass** der als Steg ausgebildete erste Bereich (11) über einen verbreiterten Endbereich verfügt, mit dem er an den Rest der Spule (19) angeschlossen ist.

4. Pulsschweißspule nach einem der vorhergehenden Ansprüche, **dadurch gekennzeichnet, dass** die lösbare Verbindung dadurch gegeben ist, dass
- Schrauben oder Gewindebolzen entweder durch gewindelose Bohrungen in dem Bereich hoher Stromdichte (11) und dem Rest der Spule (19) gesteckt und durch Kontermuttern festgezogen sind, oder in ein in den ersten Bereich (11) oder den Rest der Spule (19) eingebrachtes Gewindeloch eingeschraubt sind, und/oder
- der erste Bereich (11) mit einem Endbereich (115) in eine komplementäre, zur Ausbildung einer flächigen Anlage der beiden Teile ausgebildeten Ausnehmung (190) des Rests der Spule (19) eingesteckt ist.

5. Pulsschweißspule nach einem der vorhergehenden Ansprüche, **gekennzeichnet durch** einen U-förmigen Grundriss des Rests der Spule (19), wobei dessen Quererstreckung überall groß ist im Vergleich zur Quererstreckung des ersten Bereichs (11).

6. Pulsschweißspule nach einem der vorhergehenden Ansprüche, **gekennzeichnet durch** eine Spiegelsymmetrie der Spule (1).

7. Pulsschweißspule nach einem der vorhergehenden Ansprüche, **gekennzeichnet durch,** mehr als einen Bereich (11) geeignet zur Erzeugung einer gegenüber der Stromdichte des zweiten Bereichs (12) höheren Stromdichte.

8. Pulsschweißspule nach einem der vorhergehenden Ansprüche, **dadurch gekennzeichnet, dass** sich der Querschnitt der Spule (1) in ihrem Verlauf stetig, insbesondere stetig differenzierbar, ändert.

9. Verwendung einer elektromagnetischen Pulsschweißspule nach einem der Ansprüche 1 bis 8, **dadurch gekennzeichnet, dass**
a) die Verbindung des ersten Bereichs (11) mit dem Rest der Spule (19) gelöst und der erste Bereich entfernt wird,
b) ein neuer erster Bereich (11') bereitgestellt und mit dem Rest der Spule verbunden wird.

## Claims

1. Electromagnetic pulse welding coil comprising two conducting regions (11, 12), wherein the first region (11) is capable of producing a higher current density than the second region (12) which is assigned to a remainder of the coil (19),
wherein pulse welding coil (1) is planar in design, in particular is cut out of a metal plate,
**characterised in that**
the first region (11) capable of producing a higher current density (11) is detachably connected to the remainder of the coil (19).

2. Pulse welding coil according to claim 1, **characterised in that** the first region (11) is shaped as an elongated bridge with a transverse extension that is narrow compared to a longitudinal extension.

3. Pulse welding coil according to claim 2, **characterised in that** the first region (11), which is designed as a bridge, comprises a broadened end region, by which it is connected to the remainder of the coil (19).

4. Pulse welding coil according to one of the preceding claims, **characterised in that** the detachable connection is realised by means of
- screws or threaded bolts, which are either inserted through unthreaded bores in the region of high current density (11) and the remainder of the coil (19) and tightened by means of counter nuts, or are screwed into a threaded hole that is formed in the first region (11) or the remainder of the coil (19), and/or
- plugging the first region (11) with an end region (115) into a complementary recess (190), which is designed for forming a planar contact between the two parts, of the remainder of the coil (19).

5. Pulse welding coil according to one of the preceding claims, **characterised by** a U-shaped outline of the remainder of the coil (19), the lateral extension thereof being generally large in comparison to the transverse extension of the region of high current density (11).

6. Pulse welding coil according to one of the preceding claims, **characterised by** a mirror symmetry of the coil (1).

7. Pulse welding coil according to one of the preceding claims, **characterised by** more than one region (11) capable of producing a current density higher than the current density of the second region (12).

8. Pulse welding coil according to one of the preceding claims, **characterised in that** the cross-section of the coil (1) changes continuously, in particular continuously differentiably, in its profile.

9. Use an electromagnetic pulse welding coil according to one of claims 1 to 8, **characterised in that**
a) the connection of the first region (11) to the remainder of the coil (19) is released and the first region is removed
b) a new first region (11') is provided and is connected to the remainder of the coil.

## Revendications

1. Bobine de soudage par impulsions électromagnétiques comprenant deux régions conductrices (11, 12), dans laquelle la première région (11) est capable de produire une densité de courant plus élevée que la seconde région (12) qui est attribuée à un reste de la bobine (19),
dans lequel la bobine de soudage par impulsions (1) est de conception plane, en particulier est découpée dans une plaque métallique,
**caractérisé en ce que**
la première région (11) capable de produire une densité de courant plus élevée (11) est connectée de manière amovible au reste de la bobine (19).

2. Bobine de soudage par impulsions selon la revendication 1, **caractérisée en ce que** la première zone (11) est conformée en une bande allongée avec une extension transversale étroite par rapport à une extension longitudinale.

3. Bobine de soudage par impulsions selon la revendication 2, **caractérisée en ce que** la première zone (11) conformée en une bande présente une zone d'extrémité élargie avec laquelle elle est reliée au reste de la bobine (19).

4. Bobine de soudage par impulsions selon l'une des revendications précédentes, **caractérisée en ce que** la connexion amovible est réalisée **en ce que**
- les vis ou boulons filetés sont insérés à travers des trous non filetés dans la zone de forte densité de courant (11) et le reste de la bobine (19) et serrés avec des contre-écrous, ou sont vissés dans des trous taraudés en la première zone (11) ou le reste de la bobine (19), et/ou
- la première région (11) est insérée avec une région d'extrémité (115) dans un évidement complémentaire (190) du reste de la bobine (19) qui est destiné à former un contact plat entre les deux pièces..

5. Bobine de soudage par impulsions selon l'une des revendications précédentes, **caractérisée par** un plan en U du reste de la bobine (19), dont l'étendue transversale est partout grande par rapport à l'étendue transversale de la première zone (11).

6. Bobine de soudage par impulsions selon l'une des revendications précédentes, **caractérisée par** une symétrie miroir de la bobine (1).

7. Bobine de soudage par impulsions selon l'une des revendications précédentes, **caractérisée par** plus d'une zone (11) apte à générer une densité de courant supérieure à la densité de courant de la deuxième zone (12).

8. Bobine de soudage par impulsions selon l'une des revendications précédentes, **caractérisée en ce que** la section transversale de la bobine (1) évolue en continu au cours de son parcours, notamment en continu différentiable.

9. Utilisation d'une bobine de soudage par impulsions électromagnétiques selon l'une des revendications 1 à 8, **caractérisée en ce que**
a) la connexion de la première zone (11) au reste de la bobine (19) est libérée et la première zone est supprimée,
b) une nouvelle première zone (11') est prévue et reliée au reste de la bobine.
